# EUROPEAN PATENT APPLICATION

(11) **EP 4 768 325 A1**
(43) Date of publication of application: **01.07.2026**
(21) Application number: 23949779.5
(22) Date of filing: 24.08.2023
(51) Int. Cl.: B60L 58/30

(54) **HYDROGEN FILLING MONITORING SYSTEM AND HYDROGEN FILLING METHOD**

(71) Applicant: East Japan Railway Company, Tokyo 151-8578 (JP)
(72) Inventor: MURAYAMA Ken, Tokyo 151-8578 (JP); IIDA Takayuki, Tokyo 151-8578 (JP)
(74) Representative: Grünecker Patent- und Rechtsanwälte PartG mbB
(86) International application number: PCT/JP2023/030425
(87) International publication number: WO 2025/041323

(57) **Abstract**

A hydrogen filling monitoring system WS includes a hydrogen fuel cell railway vehicle 3, an external power supply 120, and a tablet terminal (monitoring terminal device) 100. The tablet terminal 100 constituting the hydrogen filling monitoring system WS includes a power receiving unit 107 that receives supply of power from the external power supply 120, and acquires monitoring information on a hydrogen supply system 10 from a control device 11 of the hydrogen supply system 10 provided in the hydrogen fuel cell railway vehicle 3. The tablet terminal 100 displays the acquired monitoring information on a display unit 104.

## Description

### TECHNICAL FIELD

The present disclosure relates to a hydrogen filling monitoring system and a hydrogen filling method.

### BACKGROUND ART

In the technical field of fuel cell cars, communication filling, by which safe hydrogen filling can be performed even at a high filling rate, is known (e.g., Patent Literature 1). This communication filling is a method of performing hydrogen filling while communicating information on pressure, temperature and so forth in an onboard tank to a hydrogen filling device via infrared communication.

### CITATION LIST

### Patent Literature

Patent Literature 1: JP 2020-112242 A

### SUMMARY OF INVENTION

### Technical Problem

However, in the technical field of railway vehicles equipped with fuel cells, a method for properly and safely filling a railway vehicle with hydrogen has not been established yet.

The present disclosure has been made in view of the above problem, and an object of the present disclosure is to provide a hydrogen filling monitoring system and a hydrogen filling method that can properly and safely fill a railway vehicle equipped with a fuel cell with hydrogen.

### Solution to Problem

In order to solve the above problem, a hydrogen filling monitoring system of the present disclosure is a hydrogen filling monitoring system including:
a hydrogen fuel cell railway vehicle;
an external power source; and
a monitoring terminal device,
wherein the monitoring terminal device includes:
   a first power receiving means of receiving electric power supply from the external power source;
   an obtaining means of obtaining, from a controller of a hydrogen supply system provided in the hydrogen fuel cell railway vehicle, monitoring information on the hydrogen supply system; and
   a display control means of displaying the monitoring information obtained by the obtaining means on a display.

Further, in order to solve the above problem, a hydrogen filling method of the present disclosure is a hydrogen filling method for a hydrogen supply system provided in a hydrogen fuel cell railway vehicle, the hydrogen filling method including:
connecting a monitoring terminal device to a controller of the hydrogen supply system;
supplying electric power from an external power source to the monitoring terminal device;
transferring monitoring information on the hydrogen supply system from the controller to the monitoring terminal device; and
displaying the monitoring information on a display of the monitoring terminal device.

### Advantageous Effects of Invention

According to the present disclosure, a railway vehicle equipped with a fuel cell can be properly and safely filled with hydrogen.

### BRIEF DESCRIPTION OF DRAWINGS

[FIG. 1] It shows a vehicle formation including a hydrogen fuel cell railway vehicle according to an embodiment of the present invention.
[FIG. 2] It is a block diagram showing an outline of a hybrid drive system.
[FIG. 3] It is a block diagram showing a schematic configuration of a hydrogen supply system.
[FIG. 4] It is a perspective view of a cover of a hydrogen storage unit.
[FIG. 5] It is a perspective view of a connecting pipe unit in a state in which pipes are modularized.
[FIG. 6] (a) is a perspective view of a C-channel material, and (b) is a perspective view showing a state in which the connecting pipe unit is fixed to the C-channel material.
[FIG. 7] It is a sectional view of the car body of the hydrogen fuel cell railway vehicle.
[FIG. 8] It shows a schematic configuration of a hydrogen filling monitoring system.
[FIG. 9] It is a block diagram showing a functional configuration of a tablet terminal for hydrogen filling.
[FIG. 10] It is a flowchart showing steps of a work for filling the hydrogen storage unit(s) with hydrogen.
[FIG. 11] It shows an example of a system state screen.
[FIG. 12] It is a perspective view showing a schematic configuration of a module.

### DESCRIPTION OF EMBODIMENTS

Hereinafter, an embodiment(s) will be described on the basis of the drawings.

### <Vehicle Formation>

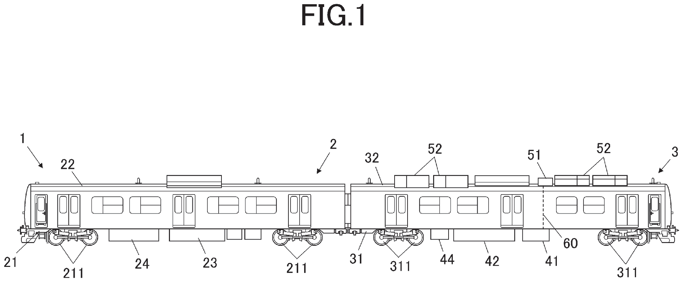

FIG. 1 shows a vehicle formation 1 including a hydrogen fuel cell railway vehicle 3 according to an embodiment of the present invention.

As shown in FIG. 1, the vehicle formation 1 is made up of a driving motor car 2 that is the lead vehicle, and the hydrogen fuel cell railway vehicle 3 that is a driving trailer coupled with the driving motor car 2.

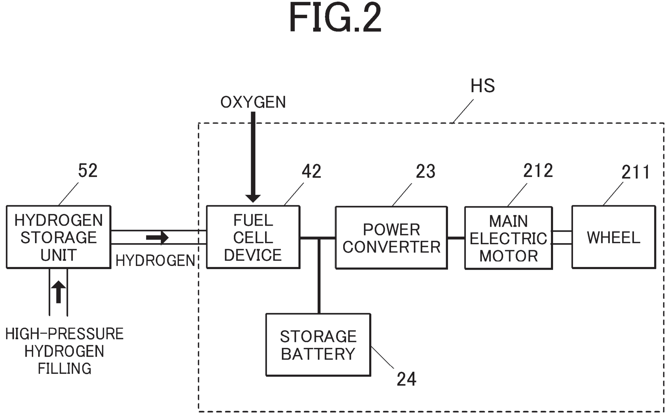

The driving motor car 2 includes a bogie 21 and a car body 22 supported by the bogie 21.
The bogie 21 is provided with wheels 211, a main electric motor 212 (shown in FIG. 2) for driving the wheels 211, a brake gear (not shown), and so forth. The car body 22 is provided with a driver's cab, a passenger compartment, and so forth. The driver's cab is provided with, for example, a system start switch that is operated for vehicle start-up, a system stop switch that is operated for vehicle shutdown, a fuel cell open switch that is operated for travel without power generation by a fuel cell device 42 (described below), and so forth.

The driving motor car 2 is provided with a power converter 23, a storage battery 24 and so forth under the floor of the car body 22.
The power converter 23 supplies electric power supplied from the storage battery 24 and/or the fuel cell device 42 to the main electric motor 212. The power converter 23 stores an excess of the power supplied from the fuel cell device 42 into the storage battery 24.

The hydrogen fuel cell railway vehicle 3 includes a bogie 31 and a car body 32 supported by the bogie 31.
The bogie 31 is provided with wheels 311 and so forth. The car body 32 is provided with a passenger compartment and so forth.

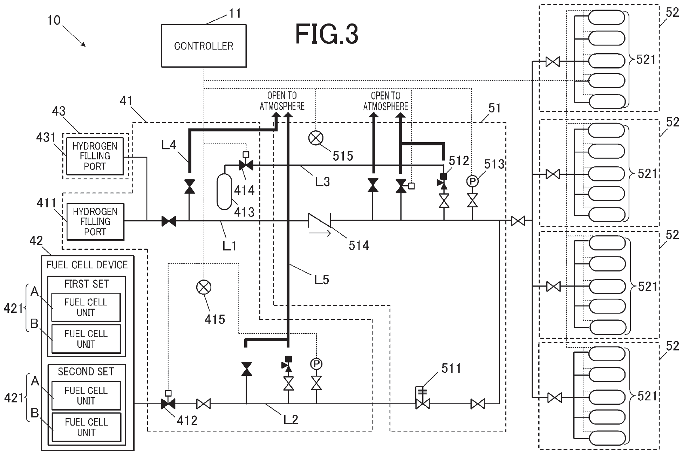

The hydrogen fuel cell railway vehicle 3 is provided with an underfloor pipe unit 41, the fuel cell device 42, a receptacle box 43 (shown in FIG. 3), a fuel cell disconnector 44 and so forth under the floor of the car body 32.

The underfloor pipe unit 41 is provided to face the left side (No. 2 and No. 4 side) in the direction from the rear toward the front of the vehicle formation 1, and the receptacle box 43 is provided to face the right side (No. 1 and No. 3 side) in the direction from the rear toward the front of the vehicle formation 1. The underfloor pipe unit 41 is provided with a hydrogen filling port 411 (described below) that is used during a hydrogen filling work, and the receptacle box 43 is provided with a hydrogen filling port 431 (described below), so that the hydrogen filling work can be performed smoothly no matter whether a ground facility (hydrogen station, etc.) for filling hydrogen storage units 52 with hydrogen is located on the No. 1 and No. 3 side or the No. 2 and No. 4 side of the vehicle formation 1. In other words, as long as hydrogen filling ports are provided on both sides of the vehicle formation 1, the underfloor pipe unit 41 having the hydrogen filling port 411 (described below) may be provided to face the right side (No. 1 and No. 3 side) in the direction from the rear toward the front of the vehicle formation 1, and the receptacle box 43 having the hydrogen filling port 431 (described below) may be provided to face the left side (No. 2 and No. 4 side) in the direction from the rear toward the front of the vehicle formation 1, for example.

The hydrogen fuel cell railway vehicle 3 is also provided with a rooftop pipe unit 51, multiple (e.g., four) hydrogen storage units 52 and so forth on the roof of the car body 32. The hydrogen fuel cell railway vehicle 3 is also provided with, on a side structure of the car body 32, a connecting pipe unit 60 that connects the underfloor pipe unit 41 and the rooftop pipe unit 51.

As described above, the vehicle formation 1 is provided with the storage battery 24 in the driving motor car 2, and also provided with the fuel cell device 42 in the hydrogen fuel cell railway vehicle 3. In other words, the vehicle formation 1 adopts a hybrid drive system HS that uses both the storage battery 24 and the fuel cell device 42 as power sources.

FIG. 2 is a block diagram showing an outline of the hybrid drive system HS.
As shown in FIG. 2, in the hybrid drive system HS, when electric power is required for power running or the like, hydrogen is supplied from the hydrogen storage units 52 to the fuel cell device 42, so that electric power is generated through a chemical reaction between hydrogen and oxygen. The power generated by this power generation is supplied to the storage battery 24 via the power converter 23. From the storage battery 24, electric power corresponding to the charge amount of the storage battery 24 is supplied to the power converter 23. The power converter 23 drives the main electric motor 212 on the basis of the supplied power.

### <Configuration of Hydrogen Supply System>

Next, a hydrogen supply system 10 that supplies hydrogen to the fuel cell device 42 will be described with reference to FIG. 3.

FIG. 3 is a block diagram showing a schematic configuration of the hydrogen supply system 10.
As shown in FIG. 3, the hydrogen supply system 10 includes a controller 11, the underfloor pipe unit 41, the receptacle box 43, the rooftop pipe unit 51, four hydrogen storage units 52, and the connecting pipe unit 60. Although FIG. 3 shows four hydrogen storage units 52, the number of hydrogen storage units 52 is not specifically limited.

The controller 11 is a device for controlling operations accompanying filling the hydrogen storage units 52 with hydrogen and supplying hydrogen from the hydrogen storage units 52 to the fuel cell device 42. The controller 11 is composed of, for example, a programmable logic controller (PLC), a tank valve controller, or the like.

The hydrogen supply system 10 includes a hydrogen filling line L1, a low-pressure hydrogen supply line L2, a nitrogen supply line L3, a first depressurization line L4 and a second depressurization line L5 in the underfloor pipe unit 41 and the rooftop pipe unit 51 that are connected via the connecting pipe unit 60.

The hydrogen filling line L1 is a line to transfer hydrogen (high-pressure hydrogen) supplied from the hydrogen filling port 411 provided in the underfloor pipe unit 41 or the hydrogen filling port 431 provided in the receptacle box 43 to the rooftop pipe unit 51. The hydrogen filling line L1 is connected to the hydrogen storage units 52, and the hydrogen transferred through this hydrogen filling line L1 is stored in hydrogen containers 521 in a hydrogen storage unit 52 specified in advance.

The hydrogen filling line L1 is provided with a high pressure gauge (pressure detector) 513 at a point in the rooftop pipe unit 51. The high pressure gauge 513 is equipped with a communication module (not shown) to be able to output a measurement value of pressure of hydrogen (filling hydrogen) to the controller 11.

The low-pressure hydrogen supply line L2 is a line to transfer hydrogen supplied from the hydrogen storage units 52 to the underfloor pipe unit 41 after it is pressure-reduced by a pressure reducing valve 511 in the rooftop pipe unit 51. With safety in the case of occurrence of a railway crossing accident or the like taken into account, the pressure reducing valve 511 is provided in the rooftop pipe unit 51 to create a situation where no high-pressure hydrogen is present under the floor during travel. The low-pressure hydrogen supply line L2 is connected to the fuel cell device 42, and the hydrogen transferred through this low-pressure hydrogen supply line L2 is supplied to the fuel cell device 42 via a low-pressure solenoid valve 412 in the underfloor pipe unit 41. The low-pressure solenoid valve 412 is capable of being open and closed under the control of the controller 11.

The nitrogen supply line L3 is a line to supply nitrogen gas from a nitrogen gas container 413 in the underfloor pipe unit 41 to an emergency depressurization valve 512 in the rooftop pipe unit 51 via a nitrogen solenoid valve 414 when hydrogen leakage occurs in the hydrogen filling line L1. The nitrogen gas container 413 is not limited to being provided in the underfloor pipe unit 41, but may be provided in the rooftop pipe unit 51, for example. The nitrogen solenoid valve 414 is capable of being open and closed under the control of the controller 11. The emergency depressurization valve 512 is what is called a pneumatic valve. The emergency depressurization valve 512 becomes opened by nitrogen gas being supplied, thereby being able to release hydrogen in the hydrogen filling line L1 from, in the rooftop pipe unit 51, a predetermined pipe that is open to the atmosphere. If a solenoid valve is used for the emergency depressurization valve 512, a spark that is generated when this solenoid valve operates may become an ignition source. Therefore, in this embodiment, a pneumatic valve is used for the emergency depressurization valve 512.

A method for detecting hydrogen leakage in the hydrogen filling line L1 will be described.
The controller (discriminating means) 11 successively obtains values of the pressure of the filling hydrogen, the values being output from the high pressure gauge 513, and determines on the basis of the values of the pressure of the filling hydrogen whether a decrease rate of the values of the pressure per hour is equal to or greater than a certain value. If the controller 11 determines that the decrease rate of the values of the pressure per hour is equal to or greater than a certain value, the controller 11 determines that hydrogen leakage has occurred in the hydrogen filling line L1.

The first depressurization line L4 is a line to release hydrogen (high-pressure hydrogen) after the hydrogen filling work finishes, from, in the rooftop pipe unit 51, a predetermined pipe that is open to the atmosphere, the hydrogen remaining, of the hydrogen filling line L1, in a section from the hydrogen filling port 411 or the hydrogen filling port 431 to a check valve 514 in the rooftop pipe unit 51. With safety in the case of occurrence of a railway crossing accident or the like taken into account, the first depressurization line L4 is provided and also the check valve 514 is provided not in the underfloor pipe unit 41 but in the rooftop pipe unit 51 to create a situation where no high-pressure hydrogen is present under the floor during travel.

The second depressurization line L5 is a line to release hydrogen in the low-pressure hydrogen supply line L2 at the time of an emergency, from, in the rooftop pipe unit 51, a predetermined pipe that is open to the atmosphere.

Each hydrogen storage unit 52 has five hydrogen containers 521 for storing hydrogen. Each hydrogen storage unit 52 is provided with a measurement device(s) (not shown) that measures pressures and surface temperatures of the five hydrogen containers 521. This measurement device is equipped with a communication module (not shown), thereby being able to output measurement values of the pressures and the surface temperatures of the hydrogen containers 521 to the controller 11. Although not shown, each hydrogen storage unit 52 is provided with a box member that makes the back portion of a wiring connector constituting the unit 52 watertight. Each hydrogen storage unit 52 is also provided with a cover 522 that covers the five hydrogen containers 521. The number of hydrogen containers 521 provided in each hydrogen storage unit 52 is not limited to five, but may be any of one to four, or six or more.

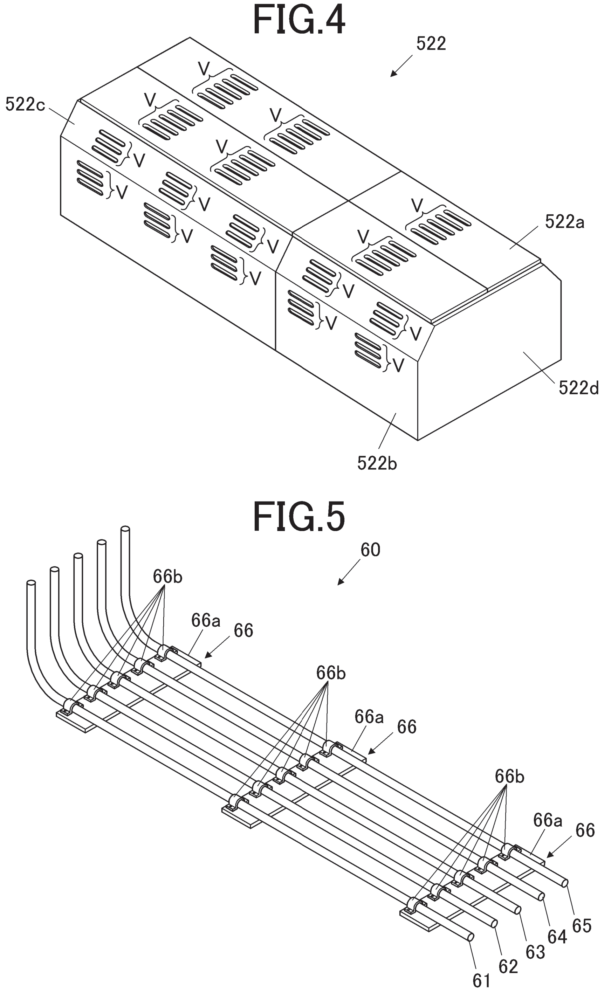

FIG. 4 is a perspective view of the cover 522 of each hydrogen storage unit 52.
As shown in FIG. 4, the cover 522 is made up of a top cover 522a, side covers 522b, sloped top covers 522c, a front cover (not shown), and a rear cover 522d. Of these covers 522a to 522d, the top cover 522a, the side covers 522b and the sloped top covers 522c each have vents (gullies) V drilled at predetermined positions. The vents V drilled in the top cover 522a and the sloped top covers 522c are provided in order to smoothly discharge leaked hydrogen in the case of occurrence of hydrogen leakage in the hydrogen storage unit 52. The vents V drilled in the side covers 522b are provided in order to reduce a temperature rise in the unit 52 by securing paths for outside air to flow in and replacing air inside the hydrogen storage unit 52 with air outside the hydrogen storage unit 52 by an airflow during travel. The top cover 522a is formed in the shape of a swinging door that opens from the center to both sides (sides where the sloped top side covers 522c are provided) in order to make daily inspections for hydrogen leakage in the hydrogen storage unit 52 easy. The outer shape of the cover 522 shown in FIG. 4 is a mere example. The cover 522 has an outer shape (e.g., a cuboid shape or another polyhedral shape, etc.) in which at least the vents V provided in order to smoothly discharge leaked hydrogen in the case of occurrence of hydrogen leakage in the hydrogen storage unit 52 and the vents V provided in order to reduce a temperature rise in the hydrogen storage unit 52 by securing paths for outside air to flow in and replacing air inside the unit 52 with air outside the unit 52 by an air flow during travel can be arranged.

As shown in FIG. 5, the connecting pipe unit 60 includes a first pipe 61, a second pipe 62, a third pipe 63, a fourth pipe 64, and a fifth pipe 65.

The first pipe 61 is a pipe for connecting, of the hydrogen filling line L1, a portion between the underfloor pipe unit 41 and the rooftop pipe unit 51.
The second pipe 62 is a pipe for connecting, of the low-pressure hydrogen supply line L2, a portion between the underfloor pipe unit 41 and the rooftop pipe unit 51.
The third pipe 63 is a pipe for connecting, of the nitrogen supply line L3, a portion between the underfloor pipe unit 41 and the rooftop pipe unit 51.
The fourth pipe 64 is a pipe for connecting, of the first depressurization line L4, a portion between the underfloor pipe unit 41 and the rooftop pipe unit 51.
The fifth pipe 65 is a pipe for connecting, of the second depressurization line L5, a portion between the underfloor pipe unit 41 and the rooftop pipe unit 51.

The connecting pipe unit 60 also includes multiple (e.g., three) pipe support members 66 for modularizing the pipes 61 to 65. Each pipe support member 66 includes a pipe support 66a formed in the shape of a flat plate and five saddle bands 66b for fixing the pipes 61 to 65 to the pipe support 66a. The saddle bands 66b are not limited to fixing the pipes 61 to 65 on a one-to-one basis, but may each be capable of fixing multiple (e.g., two, three, etc.) pipes simultaneously.

FIG. 5 is a perspective view of the connecting pipe unit 60 in which the pipes 61 to 65 are modularized.
As shown in FIG. 5, in the connecting pipe unit 60, the pipes 61 to 65 are fixed at positions in the upper, middle and lower parts by the saddle bands 66b to the pipe supports 66a, thereby being modularized.

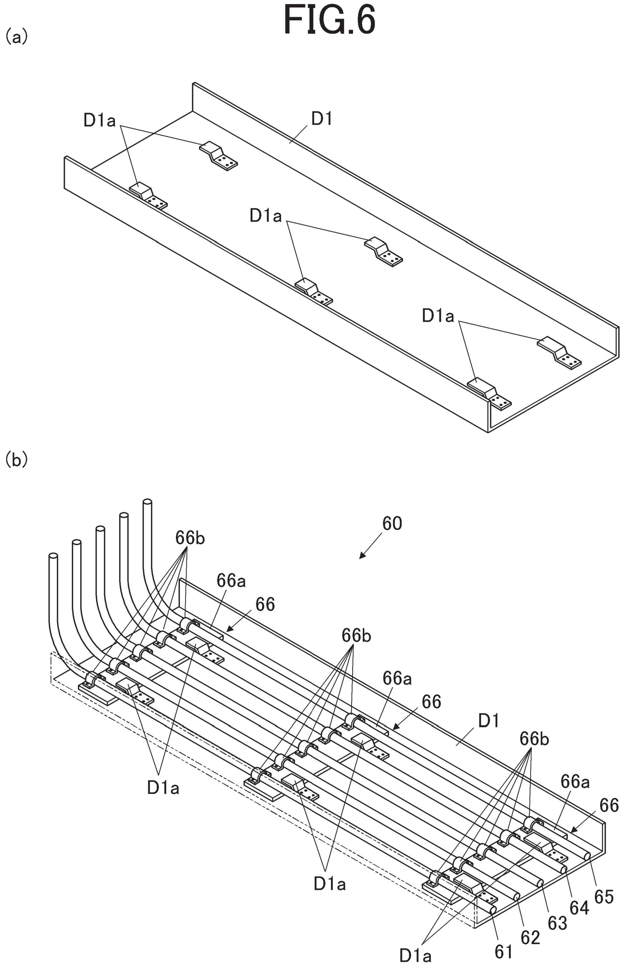

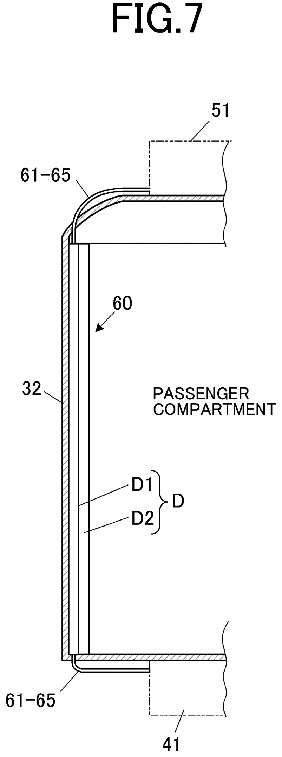

FIG. 6(a) is a perspective view of a C-channel material D1. The C-channel material D1 is a member constituting a duct D (shown in FIG. 7) that allows the connecting pipe unit 60 to pass through. The duct D is formed by the C-channel material D1 being joined to a C-channel material D2 (shown in FIG. 7) having the same shape as the C-channel material D1 to be a shape of a Japanese sweet monaka or a clamshell.

As shown in FIG. 6(a), the C-channel material D1 has three pairs of fixed parts (seats) D1a. The pairs of fixed parts (seats) D1a are provided at positions in the upper, middle and lower parts of the inner surface of the C-channel material D1 at the same intervals as the intervals between the pipe supports 66a of the connecting pipe unit 60 described above, and configured such that the pipe supports 66a of the connecting pipe unit 60 can be inserted therein. The pair of fixed parts (seats) D1a provided at the lower part of the C-channel material D1 is designed to have hooks longer than those of the pairs of fixed parts (seats) D1a provided at the upper and middle parts of the C-channel material D1. This is so that when the pipe supports 66a of the connecting pipe unit 60 are inserted into the pairs of fixed parts (seats) D1a provided at the upper, middle and lower parts of the C-channel material D1, the pipe support 66a arranged at the lower part of the connecting pipe unit 60 can be inserted into the pair of fixed parts (seats) D1a before the other pipe supports 66a. Although FIG. 6(a) shows an example of the C-channel material D1 having three pairs of fixed parts (seats) D1a, the C-channel material D1 may have pairs of fixed parts (seats) D1a, for example, at positions in the uppermost and lowermost parts and a position(s) in one or more middle parts therebetween, namely, may have three or more pairs of fixed parts (seats) D1a. In this case, in the connecting pipe unit 60, (e.g., four) pipe supports 66a are arranged for the number of pairs (e.g., four pairs) of fixed parts (seats) D1a arranged in the C-channel material D1.

FIG. 6(b) is a perspective view showing a state in which the connecting pipe unit 60 is fixed to the C-channel material D1.
As shown in FIG. 6(b), the connecting pipe unit 60 is fixed to the C-channel material D1 by the pipe supports 66a of the connecting pipe unit 60 being inserted into the pairs of fixed parts (seats) D1a provided at the upper, middle and lower parts of the C-channel material D1. After the connecting pipe unit 60 is fixed to the C-channel material D1, the C-channel material D2 is joined to the C-channel material D1 to be a shape of a Japanese sweet monaka or a clamshell, so that the connecting pipe unit 60 in a state of passing through the duct D is formed. Thus, the pipes 61 to 65 can be installed in the duct D at a time, and the work of fixing the pipes 61 to 65 in the duct D can be performed in a simple and easy manner.

FIG. 7 is a sectional view of the car body 32 of the hydrogen fuel cell railway vehicle 3.
As shown in FIG. 7, the connecting pipe unit 60 in the state of passing though the duct D is combined with the side structure constituting the car body 32 of the hydrogen fuel cell railway vehicle 3. One end (lower end) of each of the pipes 61 to 65 constituting the connecting pipe unit 60 is connected to the underfloor pipe unit 41. The other end (upper end) of each of the pipes 61 to 65 constituting the connecting pipe unit 60 is connected to the rooftop pipe unit 51.
Thus, the pipes 61 to 65, each of which is undividable at any points, can be installed in the duct D of the side structure of the car body 32, which can ensure safety of the pipes 61 to 65. The duct D can isolate the pipes 61 to 65 from the passenger compartment of the hydrogen fuel cell railway vehicle 3 because the duct D does not have holes drilled in it for works, such as pipe fixation. As a result, hydrogen leakage into the passenger compartment of the hydrogen fuel cell railway vehicle 3 can be prevented.

### <Hydrogen Filling Work>

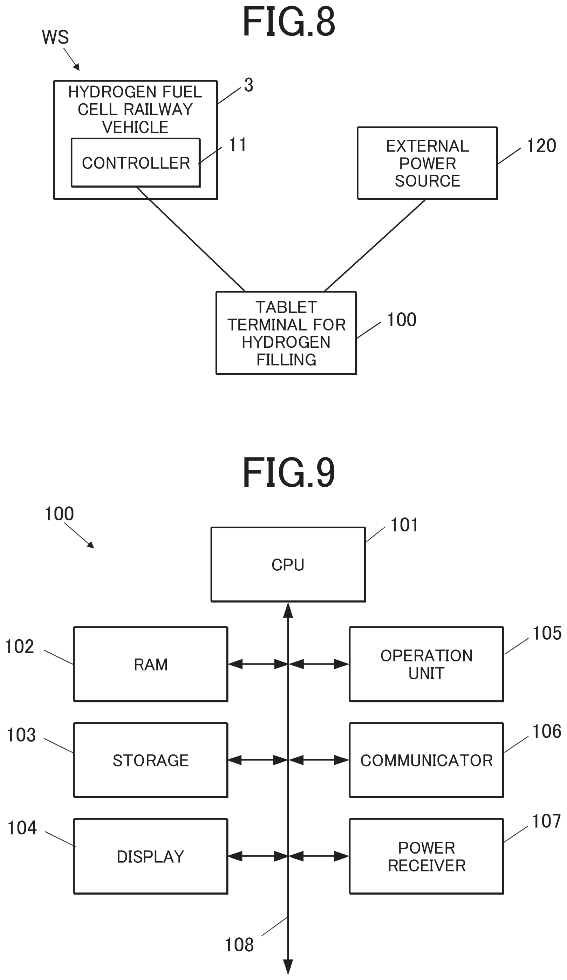

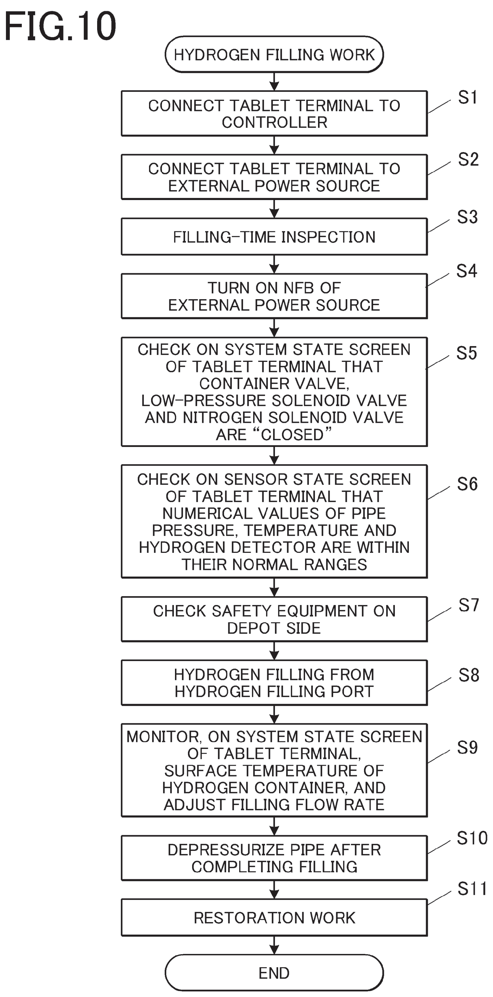

Next, steps of the work for filling the hydrogen storage units 52 of the hydrogen fuel cell railway vehicle 3 with hydrogen will be described with reference to FIG. 8 to FIG. 10. FIG. 8 shows a schematic configuration of a hydrogen filling monitoring system WS. FIG. 10 is a flowchart showing the steps of the work for filling the hydrogen storage units 52 with hydrogen.

As shown in FIG. 8, the hydrogen filling monitoring system WS is a system used for filling the hydrogen storage units 52 of the hydrogen fuel cell railway vehicle 3 with hydrogen, and is made up of the hydrogen fuel cell railway vehicle 3, a tablet terminal for hydrogen filling (hereinafter simply referred to as "tablet terminal") 100, and an external power source 120.

The tablet terminal 100 is a terminal device for monitoring the system state and so forth of the hydrogen supply system 10 when the hydrogen storage units 52 are filled with hydrogen.

The external power source 120 is a power source for supplying electric power to the tablet terminal 100, and is different from a vehicle power source of the hydrogen fuel cell railway vehicle 3.

The controller 11, which constitutes the hydrogen supply system 10 of the hydrogen fuel cell railway vehicle 3, and the tablet terminal 100 are connected via an Ethernet cable. The controller 11 and the tablet terminal 100 may be connected by wireless communication (e.g., Bluetooth^{®} Low Energy (BLE) communication). The tablet terminal 100 and the external power source 120 are connected via a power cable.

FIG. 9 is a block diagram showing a functional configuration of the tablet terminal 100.
As shown in FIG. 9, the tablet terminal 100 includes a CPU 101, a RAM 102, a storage 103, a display 104, an operation unit 105, a communicator 106, a power receiver 107, and a bus 108. The components of the tablet terminal 100 are connected via the bus 108.

The CPU 101 is a processor that reads and executes programs stored in the storage 103 and performs various types of arithmetic processing, thereby controlling the operation of each component of the tablet terminal 100.

The RAM 102 provides the CPU 101 with a memory space for work and stores temporary data.

The storage 103 is a non-transitory recording medium readable by the CPU 101 and stores programs and various data. The storage 103 includes a nonvolatile memory, such as a flash memory, for example. The programs are stored in the storage 103 in the form of computer-readable program code.

The display 104 is composed of a liquid crystal display (LCD) or the like, and displays screens in accordance with display control signals from the CPU 101.

The operation unit 105 receives user input operations and outputs input signals corresponding to the input operations to the CPU 101. The operation unit 105 includes a touchscreen superimposed on the display screen of the display 104, and detects, with this touchscreen, touches with a user finger or the like as input operations. The operation unit 105 may include hardware buttons together with or instead of the touchscreen and receive input operations with the hardware buttons.

The communicator 106 performs wireless communication through a base station(s) or an access point(s) on a communication network by mobile communication or Wi-Fi^{®} communication. The communicator 106 communicates information to and from the controller 11 via the Ethernet cable mentioned above.

The power receiver 107 supplies electric power input from the external power source 120 to each component of the tablet terminal 100 at a predetermined voltage.

FIG. 10 is the flowchart showing the steps of the work for filling the hydrogen storage units 52 with hydrogen.
As shown in FIG. 10, when the hydrogen filling work is started, first, the tablet terminal 100 is connected to the controller 11 of the hydrogen supply system 10 via the Ethernet cable (Step S1).

Next, the tablet terminal 100 is connected to the external power source 120 via the power cable (Step S2). However, in Step S2, an external power switch of the external power source 120 is not turned on.

Next, a filling-time inspection is performed in accordance with a predetermined manual (Step S3).

Next, the NFB of the external power source 120 is turned on (Step S4). At the time, it is checked that the controller 11 has started in a filling mode.

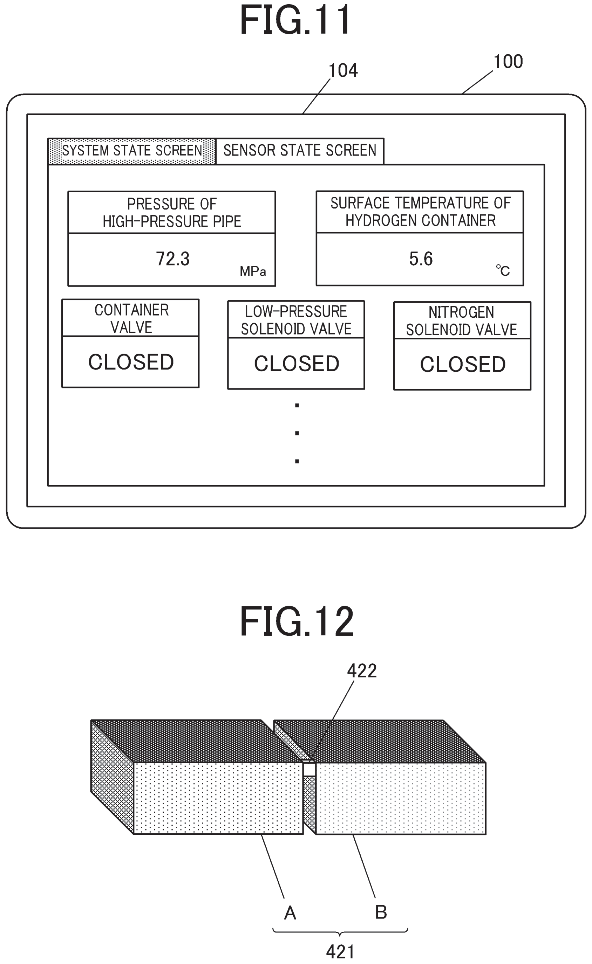

Next, as shown in FIG. 11, it is checked on the display 104 of the tablet terminal 100 that a container valve (not shown), the low-pressure solenoid valve 412 (shown in FIG. 3) and the nitrogen solenoid valve 414 (shown in FIG. 3) are closed (Step S5). This system state screen is displayed when access is made to a predetermined web page via Wi-Fi^{®} after the tablet terminal 100 is powered and a login operation is made. When a "Sensor State Screen" tab displayed on the system state screen is operated, a switch to a sensor state screen (not shown) is made.
The above means that the CPU (obtaining means, display control means) 101 of the tablet terminal 100 has obtained monitoring information on the hydrogen supply system 10 from the controller 11 of the hydrogen supply system 10 provided in the hydrogen fuel cell railway vehicle 3, and displayed the obtained monitoring information on the display 104.

Next, the screen displayed on the tablet terminal 100 is switched from the system state screen to the sensor state screen (not shown), and it is checked on the sensor state screen that numerical values of pipe pressure, temperature, hydrogen detectors 415, 515 (shown in FIG. 3) and so forth are within their normal ranges (Step S6). When the numerical values of the pipe pressure, the temperature, the hydrogen detectors 415, 515 and so forth are not within their normal ranges, regions where the numerical values of these items are displayed are displayed in a color different from a normal display color.
The above means that the CPU (determining means) 101 of the tablet terminal 100 has determined on the basis of the monitoring information obtained from the controller 11 whether the hydrogen supply system 10 is normal, and displayed the result of the determination on the display 104. The above also means that the CPU (determining means) 101 of the tablet terminal 100 has obtained, as the monitoring information, information on at least the numerical values of the pipe pressure and the temperature of the hydrogen supply system 10, the hydrogen concentration(s) detected by the hydrogen detectors 415, 515 in the hydrogen supply system 10 and the surface temperature(s) of the hydrogen container(s) 521, and determined on the basis of the obtained information on the numerical values whether the numerical values are within their normal ranges.

Next, safety equipment (e.g., fire extinguisher, sprinkler, etc.) on the depot side is checked (Step S7).

Next, a rubber cap of the hydrogen filling port 411 provided in the underfloor pipe unit 41 or the hydrogen filling port 431 provided in the receptacle box 43 is removed and a nozzle of filling equipment is attached thereto, and its adjacent manual valve (not shown) is turned to be "Open" so that hydrogen filling is started (Step S8).

Next, during the hydrogen filling, the surface temperature of the hydrogen container 521 being filled with hydrogen is monitored on the sensor state screen (shown in FIG. 11) displayed on the tablet terminal 100, and a filling flow rate is adjusted so as not to exceed a predetermined upper limit temperature (Step S9).

Next, when the hydrogen filling is performed up to a predetermined pressure, the hydrogen filling is finished, and the hydrogen (high-pressure hydrogen) remaining, of the hydrogen filling line L1, in the section from the hydrogen filling port 411 or the hydrogen filling port 431 to the check valve 514 is depressurized (Step S10). The depressurized hydrogen passes through the first depressurization line L4 to be released from, in the rooftop pipe unit 51, a predetermined pipe that is open to the atmosphere.

Next, a restoration work is performed (Step S11) in reverse order of the steps (Step S1 to Step S10) of the work described above, and the hydrogen filling work is ended.

### <Fuel Cell Device>

Next, the fuel cell device 42 will be described. As shown in FIG. 3, the fuel cell device 42 is composed of two modules 421 in each of which a fuel cell unit A and a fuel cell unit B are united. The fuel cell unit A and the fuel cell unit B each include a fuel cell module, a reserve tank, an ion exchanger, a 12V battery, an air cleaner, an EV water pump, a radiator and a relay box to generate electric power. Although the fuel cell device 42 is composed of two modules 421 in this embodiment, it may be composed of one module 421, or three or more modules 421.

FIG. 12 is a perspective view showing a schematic configuration of each module 421.
As shown in FIG. 12, in the module 421, the fuel cell unit A and the fuel cell unit B are arranged to be adjacent to one another. The module 421 is provided with a hydrogen detector 422 between the fuel cell unit A and the fuel cell unit B, namely, at the center of the module 421.

As described above, the hydrogen filling monitoring system WS of this embodiment includes the hydrogen fuel cell railway vehicle 3, the external power source 120, and the tablet terminal 100. The tablet terminal 100, which constitutes the hydrogen filling monitoring system WS, includes the power receiver 107 that receives electric power supply from the external power source 120, and obtains monitoring information on the hydrogen supply system 10 from the controller 11 of the hydrogen supply system 10 provided in the hydrogen fuel cell railway vehicle 3. Further, the tablet terminal 100 displays the obtained monitoring information on the display 104.
Therefore, according to the hydrogen filling monitoring system WS, the tablet terminal 100 can receive electric power supply from the external power source 120, and the hydrogen filling work can be performed while the monitoring information displayed on the display 104 of the tablet terminal 100 is checked, so that the hydrogen fuel cell railway vehicle 3 can be properly and safely filled with hydrogen.

Furter, the hydrogen filling monitoring system WS determines on the basis of the obtained monitoring information whether the hydrogen supply system 10 is normal, and displays the result of the determination on the display.
Therefore, according to the hydrogen filling monitoring system WS, it is possible to check at a glance whether the hydrogen supply system 10 is normal from the displayed result of the determination, so that the hydrogen fuel cell railway vehicle 3 can be properly and safely filled with hydrogen.

Further, the hydrogen filling monitoring system WS obtains, as the monitoring information, information on at least the numerical values of the pipe pressure and the temperature of the hydrogen supply system 10, the hydrogen concentration(s) detected by the hydrogen detectors 415, 515 in the hydrogen supply system 10 and the surface temperature(s) of the hydrogen container(s) 521, and determines on the basis of the information on the numerical values whether the numerical values are within their normal ranges.
Therefore, according to the hydrogen filling monitoring system WS, it is possible to check at a glance the state of each device in the hydrogen supply system 10, so that the hydrogen fuel cell railway vehicle 3 can be more properly and more safely filled with hydrogen.

### <Others>

The above embodiment is an example, and various modifications can be made.

For example, in the above embodiment, the vehicle formation 1 is composed of two cars, which are the driving motor car 2 as the lead vehicle and the hydrogen fuel cell railway vehicle 3 as the driving trailer coupled to the driving motor car 2, but may be composed of four or more cars with two cars as one unit.

Further, in the above embodiment, as shown in FIG. 5, in the connecting pipe unit 60, the first pipe 61, the second pipe 62, the third pipe 63, the fourth pipe 64 and the fifth pipe 65 are arranged in this order from the left end, but the arrangement order of the pipes 61 to 65 is not specifically limited.

Further, in the above embodiment, when the hydrogen filling work is performed, the tablet terminal 100 is connected to the external power source 120 via the power cable, and operates by receiving electric power supply from the external power source 120, but may be able to receive electric power supply from the vehicle power source of the hydrogen fuel cell railway vehicle 3 too.

Further, in the above embodiment, when the hydrogen filling work is performed, at the tablet terminal 100, the numerical values of the pipe pressure, the temperature, the hydrogen detectors 415, 515 and so forth can be checked on the sensor state screen, but these numerical values may be able to be recorded in the storage 103 of the tablet terminal 100. Further, when the hydrogen filling work is performed, the hydrogen supply system 10 may be able to be operated via the operation unit 15 of the tablet terminal 100, for example.

Besides, the specific details of the configurations, components and controls described in the above embodiment can be changed as appropriate without departing from the scope of the present disclosure. Also, the components, configurations and controls described in the above embodiment can be combined as appropriate without departing from the scope of the present disclosure.

### Industrial Applicability

The present disclosure is applicable to a hydrogen fuel cell railway vehicle.

### Reference Signs List

- 1: Vehicle Formation
- 10: Hydrogen Supply System
- 11: Controller
- 2: Driving Motor Car
- 21: Bogie
- 211: Wheel
- 212: Main Electric Motor
- 22: Car Body
- 23: Power Converter
- 24: Storage Battery
- 3: Hydrogen Fuel Cell Railway Vehicle
- 31: Bogie
- 311: Wheel
- 32: Car Body
- 41: Underfloor Pipe Unit
- 411: Hydrogen Filling Port
- 412: Low-pressure Solenoid Valve
- 413: Nitrogen Gas Container
- 414: Nitrogen Solenoid Valve
- 415: Hydrogen Detector
- 42: Fuel Cell Device
- 421: Module
- 43: Receptacle Box
- 431: Hydrogen Filling Port
- 51: Rooftop Pipe Unit
- 511: Pressure Reducing Valve
- 512: Emergency Depressurization Valve
- 513: High Pressure Gauge
- 514: Check Valve
- 515: Hydrogen Detector
- 52: Hydrogen Storage Unit
- 521: Hydrogen Container
- 522: Cover
- 522a: Top Cover
- 522b: Side Cover
- 522c: Sloped Top Cover
- 522d: Rear Cover
- 60: Connecting Pipe Unit
- 61: First Pipe
- 62: Second Pipe
- 63: Third Pipe
- 64: Fourth Pipe
- 65: Fifth Pipe
- 66: Pipe Support Member
- 66a: Pipe Support
- 66b: Saddle Band
- 100: Tablet Terminal for Hydrogen Filling
- A: Fuel Cell Unit
- B: Fuel Cell Unit
- D: Duct
- D1: C-channel Material
- D1a: Fixed Part (Seat)
- D2: C-channel Material
- HS: Hybrid Drive System
- WS: Hydrogen Filling Monitoring System

## Claims

1. A hydrogen filling monitoring system comprising:
a hydrogen fuel cell railway vehicle;
an external power source; and
a monitoring terminal device,
wherein the monitoring terminal device includes:
a first power receiving means of receiving electric power supply from the external power source;
an obtaining means of obtaining, from a controller of a hydrogen supply system provided in the hydrogen fuel cell railway vehicle, monitoring information on the hydrogen supply system; and
a display control means of displaying the monitoring information obtained by the obtaining means on a display.

2. The hydrogen filling monitoring system according to claim 1, comprising:
a determining means of determining based on the monitoring information obtained by the obtaining means whether the hydrogen supply system is normal,
wherein the display control means displays a result of the determination by the determining means on the display.

3. The hydrogen filling monitoring system according to claim 2,
wherein the obtaining means obtains, as the monitoring information, information on at least numerical values of a pipe pressure of the hydrogen supply system, a temperature thereof, a hydrogen concentration detected by a hydrogen detector in the hydrogen supply system, and a surface temperature of a hydrogen container therein, and
wherein the determining means determines based on the information on the numerical values obtained by the obtaining means whether the numerical values are within their normal ranges.

4. The hydrogen filling monitoring system according to any one of claims 1 to 3, comprising a second power receiving means of receiving electric power supply from the hydrogen fuel cell railway vehicle.

5. The hydrogen filling monitoring system according to any one of claims 1 to 4, comprising a recording control means of recording the monitoring information obtained by the obtaining means in a storage.

6. A hydrogen filling method for a hydrogen supply system provided in a hydrogen fuel cell railway vehicle, the hydrogen filling method comprising:
connecting a monitoring terminal device to a controller of the hydrogen supply system;
supplying electric power from an external power source to the monitoring terminal device;
transferring monitoring information on the hydrogen supply system from the controller to the monitoring terminal device; and
displaying the monitoring information on a display of the monitoring terminal device.
